(19) Europäisches Patentamt
European Patent Office
Office européen des brevets

(11) **EP 4 123 666 B1**

(12) **FASCICULE DE BREVET EUROPEEN**

(45) Date de publication et mention
de la délivrance du brevet:
**09.04.2025 Bulletin 2025/15**

(21) Numéro de dépôt: **22186008.3**

(22) Date de dépôt: **20.07.2022**

(51) Classification Internationale des Brevets (IPC):
**G21F 9/06** *(2006.01)* **B01J 19/00** *(2006.01)*
**C01D 1/04** *(2006.01)*

(52) Classification Coopérative des Brevets (CPC):
**G21F 9/06; B01J 19/002; C01D 1/04;**
B01J 2219/0002; B01J 2219/00123;
B01J 2219/00162; B01J 2219/00263

(54) **PROCÉDÉ ET INSTALLATION DE DESTRUCTION DE SODIUM RADIOACTIF**

VERFAHREN UND ANLAGE ZUR VERNICHTUNG VON RADIOAKTIVEM NATRIUM

METHOD AND INSTALLATION FOR DESTROYING RADIOACTIVE SODIUM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.07.2021 FR 2107922**

(43) Date de publication de la demande:
**25.01.2023 Bulletin 2023/04**

(73) Titulaire: **FRAMATOME**
**92400 Courbevoie (FR)**

(72) Inventeurs:
• **VILLANI, Dominique**
**69720 Saint Laurent De Mure (FR)**
• **DEPREZ, Gérard**
**69230 Saint Genis Laval (FR)**
• **DOUCET, Olivier**
**69006 Lyon (FR)**

(74) Mandataire: **Lavoix**
**2, place d'Estienne d'Orves**
**75441 Paris Cedex 09 (FR)**

(56) Documents cités:
**EP-A1- 0 245 148 WO-A1-98/41317
US-A- 4 254 089**

**Description**

L'invention concerne en général les installations de destruction de sodium métallique radioactif, provenant typiquement de réacteurs nucléaire à neutrons rapides.

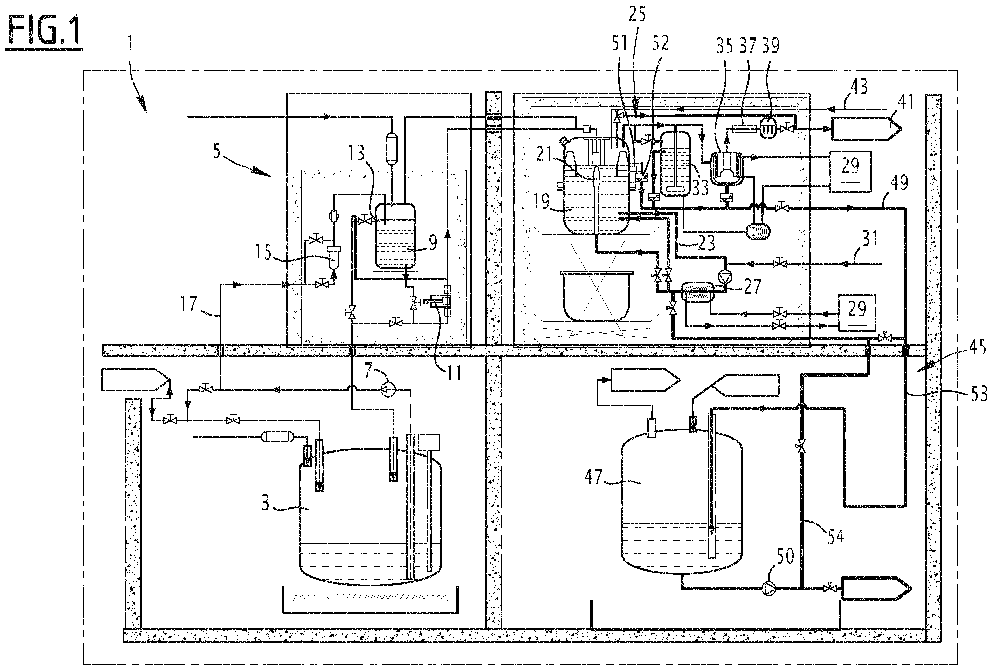

Il est possible d'agencer une telle installation comme illustré sur la figure 1. Cette installation comprend un réservoir de stockage de sodium métallique liquide 3, d'une capacité prévue pour une journée de fonctionnement de l'installation à sa capacité nominale.

Le réservoir de stockage de sodium métallique liquide 3 reçoit le sodium à traiter et alimente un circuit d'alimentation sodium 5 à l'aide d'une pompe électromagnétique 7.

Le circuit d'alimentation sodium 5 comprend principalement un réservoir de charge 9 et une pompe doseuse 11. La pompe doseuse est placée à un niveau inférieur au réservoir de charge 9, et son aspiration est alimentée gravitairement à partir du réservoir de charge 9.

Le sodium provenant du réservoir de stockage de sodium 3 remplit le réservoir de charge 9 jusqu'à une déverse 13, qui renvoie le sodium excédentaire dans le réservoir de stockage de sodium 3.

Le niveau de sodium dans le réservoir de charge est ainsi maintenu à un niveau sensiblement constant, ce qui garantit une pression constante à l'aspiration de la pompe doseuse 11.

Un filtre sodium 15 est intercalé sur la ligne 17 raccordant la pompe électromagnétique au réservoir de charge 9. Il permet de contrôler la propreté du sodium provenant du réservoir de stockage de sodium 3.

L'installation 1 comporte encore une cuve de réaction 19 contenant une solution aqueuse de soude. Le sodium refoulé par la pompe doseuse 11 est injecté par le haut dans la cuve de réaction 19 et vient réagir avec un jet de soude. Le jet de soude provient d'une buse 21, placée dans la cuve de réaction 19, et alimentée par un circuit de recirculation 23. Cet agencement garantit une réaction complète du sodium avec la solution aqueuse.

Le sodium est ainsi converti en soude, cette réaction étant accompagnée d'un dégagement d'hydrogène gazeux. La soude s'accumule dans la partie inférieure de la cuve de réaction, l'hydrogène étant évacué vers un circuit de traitement de l'hydrogène 25.

Un échangeur de chaleur 27 est intercalé sur le circuit de recirculation 23. Il est raccordé à un groupe froid 29. L'échangeur de chaleur 27 permet d'évacuer l'énergie thermique dégagée par la réaction du sodium avec la solution aqueuse.

Par ailleurs, une ligne 31 d'alimentation en eau déminéralisée est raccordée au circuit de recirculation 23. La ligne 31 permet d'injecter dans la cuve de réaction une quantité d'eau déminéralisée adéquate pour maintenir sensiblement constante la molarité de la soude à l'intérieur de la cuve de réaction.

Le circuit de traitement de l'hydrogène 25 est raccordé au couvercle de la cuve de réaction 19, et débouche dans le ciel de cette cuve. Il comprend successivement un laveur de gaz 33, un condenseur 35, un réchauffeur 37 et un filtre THE (Très Haute Efficacité) 39. Le circuit de traitement de l'hydrogène, en aval du filtre THE, est raccordé à une ventilation procédé 41.

Dans la ventilation procédé 41, l'hydrogène provenant de la cuve de réaction 19 est dilué dans une gaine de ventilation (non représentée), jusqu'à une teneur excluant tout risque d'explosion. La teneur en hydrogène dans le gaz provenant de la cuve de réaction est d'environ 100%. Dans la ventilation procédé, l'hydrogène est dilué à une teneur d'environ 1% en fonctionnement normal. La gaine de ventilation dans laquelle est effectuée la dilution est équipée d'une instrumentation permettant de confirmer l'efficacité de la dilution, en suivant à la fois le débit de gaz dans la gaine et la teneur en hydrogène.

Une alimentation en gaz inerte 43 est raccordée au couvercle de la cuve de réaction 19. Cette alimentation est prévue pour inerter la cuve de réaction 19 et le circuit de traitement de l'hydrogène 25, avant démarrage de la réaction de conversion du sodium. En cas d'arrêt de l'installation, cette alimentation en gaz inerte 43 assure l'évacuation de l'hydrogène.

L'installation comporte encore une unité de traitement des effluents liquides 45. L'unité 45 comporte un réservoir de vidange et de stockage de la solution aqueuse 47. Une ligne de vidange 49 raccorde une sortie par débordement 51 de la cuve de réaction 19 au réservoir de vidange et de stockage 47. Un purgeur 52 est intercalé dans la ligne de vidange 49 immédiatement en aval de la sortie 51. Il permet de séparer l'hydrogène gazeux de la soude, l'hydrogène gazeux étant renvoyé dans le ciel de la cuve de réaction 19.

Par ailleurs, la ligne de vidange 49 comporte une lyre 53, formant un siphon qui permet de limiter le transfert de l'hydrogène depuis le ciel de la cuve de réaction 19 vers le réservoir de vidange et de stockage 47. Un bouchon de liquide est formé dans la lyre, bloquant les transferts gazeux entre la cuve 19 et le réservoir 47.

Le réservoir de vidange et de stockage 47 est de grande capacité. Il peut stocker plusieurs jours de production de l'installation 1. Il est dimensionné pour pouvoir recevoir, en plus, toute la solution aqueuse présente dans l'installation, notamment dans la cuve de réaction 19, dans le laveur 33 et dans les différents circuits remplis de solution aqueuse.

L'unité de traitement des effluents liquides 45 comporte encore une pompe de relevage 50 et une ligne 54 prévue pour remplir en solution aqueuse la cuve de réaction 19 et la ligne de vidange 49, à partir du réservoir de vidange et de stockage 47. La pompe de relevage 50 permet également de transférer la solution aqueuse hors de l'installation.

Une telle installation est satisfaisante pour traiter des quantités significatives de sodium métallique liquide. Toutefois, elle présente le défaut d'être complexe, de grande taille, de telle sorte que le coût de traitement est excessivement élevé quand le débit journalier à traiter est limité.

Une autre installation de destruction de sodium métallique radioactif est connue du document EP 0 245 148 A1.

Dans ce contexte, l'invention vise à proposer une installation qui soit plus économique, et mieux adaptée pour une capacité de traitement réduite.

A cette fin, l'invention porte selon un premier aspect sur une installation de destruction de sodium métallique radioactif, comprenant : une cuve de réaction contenant une solution aqueuse, la cuve de réaction ayant une sortie de solution aqueuse ; un circuit d'alimentation sodium configuré pour alimenter la cuve de réaction en sodium métallique liquide ; une unité de traitement des effluents liquides, comprenant un réservoir de vidange et une ligne de vidange raccordant fluidiquement la sortie de solution aqueuse au réservoir de vidange ; une unité de traitement des gaz configurée pour diluer les gaz et relarguer les gaz dilués dans l'atmosphère, le réservoir de vidange ayant une sortie de gaz raccordée fluidiquement à l'unité de traitement des gaz ; une unité d'alimentation en gaz inerte, configurée pour alimenter le réservoir de vidange en un gaz inerte.

Ainsi, le ciel de la cuve de vidange est rempli de gaz inerte.

L'hydrogène provenant de la cuve de réaction et s'écoulant dans le réservoir de vidange par la ligne de vidange ne peut pas provoquer d'explosion.

L'hydrogène est continuellement évacué vers l'unité de traitement des gaz. Cette évacuation est obtenue du fait que le réservoir de vidange est raccordé à l'unité d'alimentation en gaz inerte.

Celle-ci maintient continuellement une surpression de gaz inerte dans le réservoir de vidange et/ou assure continuellement un balayage de gaz inerte dans le ciel de ce réservoir.

En conséquence, il n'est pas nécessaire de prévoir une lyre ou un siphon le long de la ligne de vidange, pour constituer un bouchon de solution aqueuse empêchant la circulation d'hydrogène depuis la cuve de réaction dans le réservoir de vidange.

Ceci contribue à réduire la hauteur totale de l'installation. Dans l'installation de la figure 1, la lyre a une hauteur dimensionnée par la pression interne de la cuve de réaction. Elle présente ainsi une hauteur de plusieurs mètres, et le bâtiment abritant l'installation doit être de hauteur suffisante pour permettre son installation.

Le coût total de l'installation est réduit en conséquence.

L'installation peut en outre présenter une ou plusieurs des caractéristiques ci-dessous, considérées de manière individuelle ou selon toutes les combinaisons techniquement possibles :

- la sortie de solution aqueuse est par débordement ;
- l'installation comprend un organe de contrôle configuré pour maintenir une pression de gaz inerte dans le réservoir de vidange supérieure à un minimum prédéterminé ;
- le contrôleur pilote l'unité d'alimentation en gaz inerte pour assurer un balayage de gaz inerte dans le réservoir de vidange, avec un débit de gaz inerte dans une fourchette prédéterminée ;
- la ligne de vidange est configurée pour se vider entièrement par gravité dans le réservoir de vidange ;
- l'installation comprend un circuit de traitement de l'hydrogène raccordé à la cuve de réaction, équipé d'au moins un laveur de gaz, le réservoir de vidange ayant une capacité de stockage comprise entre : un volume minimum égal à un volume nominal de solution aqueuse contenu dans la cuve de réaction plus un volume nominal de solution aqueuse contenu dans le laveur de gaz ; et un volume maximum égal à la production de soude sur une durée de 6 heures ;
- l'installation comprend un réservoir de stockage de solution aqueuse ayant une capacité de stockage supérieure à une journée de production de l'installation à capacité de traitement nominale ;
- l'installation comprend un organe de transfert ayant une aspiration raccordée au réservoir de vidange et un refoulement raccordé au réservoir de stockage de solution aqueuse ;
- le réservoir de vidange est au moins partiellement situé sous le niveau du sol et le réservoir de stockage de solution aqueuse est situé au-dessus du niveau du sol.

Selon un second aspect, l'invention porte sur un procédé de destruction de sodium métallique radioactif, comprenant les étapes suivantes : alimenter en sodium métallique liquide une cuve de réaction contenant une solution aqueuse, la cuve de réaction ayant une sortie de solution aqueuse ; collecter la solution aqueuse provenant de la cuve de réaction dans un réservoir de vidange, la solution aqueuse s'écoulant par une ligne de vidange depuis la sortie de solution aqueuse jusqu'au réservoir de vidange ; alimenter en un gaz inerte le réservoir de vidange ; diluer les gaz issus du réservoir de vidange, et relarguer les gaz dilués dans l'atmosphère.

D'autres caractéristiques et avantages de l'invention ressortiront de la description détaillée qui en est donnée ci-dessous, à titre indicatif et nullement limitatif, en référence aux figures annexées parmi lesquelles :

- la figure 1 est une représentation schématique d'un exemple d'installation de destruction de sodium non conforme à l'invention ;
- la figure 2 est une représentation schématique de l'installation de destruction de sodium selon l'invention ; et
- la figure 3 est une représentation agrandie d'un détail de la figure 2, pour une variante de réalisation de l'installation de destruction de sodium non conforme à l'invention.

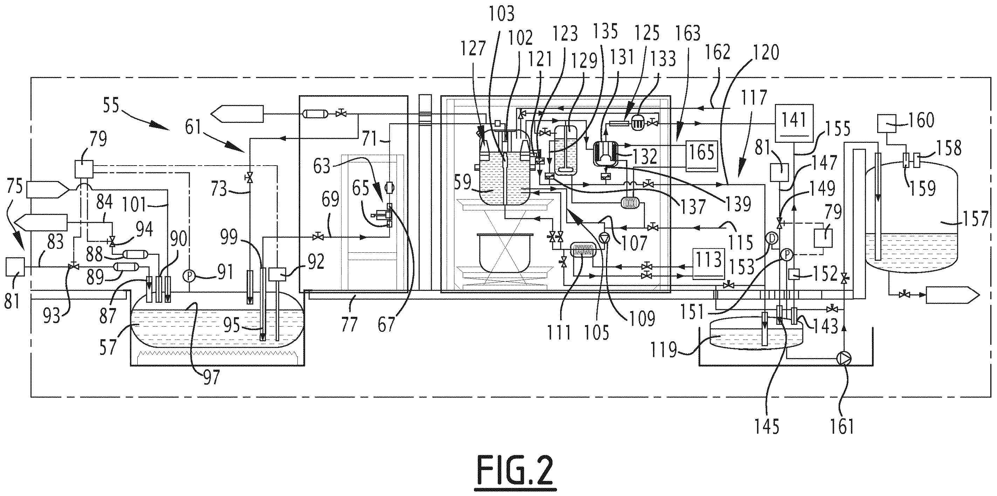

L'installation 55 représentée sur la figure 2 est prévue pour la destruction de sodium radioactif, provenant typiquement d'un réacteur à neutrons rapides tel que Phénix ou Super Phénix ou d'une boucle d'essai.

Elle est prévue plus particulièrement pour détruire le sodium métallique utilisé comme fluide caloporteur dans les réacteurs à neutrons rapides, par conversion en soude.

Cette installation utilise le procédé NOAH, qui a été développé par le Commissariat à l'Energie Atomique.

Le principe de ce procédé est d'injecter de petites quantités de sodium liquide dans un flux de solution aqueuse de fort débit, cette opération étant réalisée à l'intérieur d'une cuve étanche. Du fait que la réaction est hautement exothermique, la solution aqueuse est refroidie continuellement, sa température étant maintenue à environ 40°C.

La réaction du sodium avec l'eau de la solution aqueuse produit de la soude et de l'hydrogène. La soude est rapidement dispersée dans la solution aqueuse, sans engendrer de réaction violente. La concentration de soude dans la cuve de réaction est maintenue sensiblement constante par injection d'eau déminéralisée. Cette concentration est continuellement ajustée par exemple à dix moles/litre.

L'hydrogène généré est relargué dans l'atmosphère, après dilution et purification.

L'installation 55 comprend un réservoir 57 de stockage de sodium métallique liquide.

L'installation 55 comprend une cuve de réaction 59 contenant une solution aqueuse.

L'installation 55 comprend également un circuit d'alimentation sodium 61, configuré pour alimenter la cuve de réaction 59 en sodium métallique liquide

Le circuit d'alimentation sodium 61 comporte un organe de circulation du sodium 63.

L'organe de circulation du sodium 63 est une pompe, et plus précisément une pompe doseuse.

Elle est de tout type adapté. Par exemple c'est une pompe à membrane.

L'organe de circulation 63 a une aspiration 65 en communication fluidique avec le réservoir de stockage de sodium 57 et un refoulement 67 en communication fluidique avec la cuve de réaction 59.

Plus précisément, le circuit d'alimentation sodium 61 comprend une ligne d'aspiration 69 raccordant l'aspiration 65 de l'organe de circulation du sodium au réservoir de stockage de sodium 57. Le circuit 61 comporte également une ligne de refoulement 71 raccordant le refoulement 67 de l'organe de circulation du sodium 63 à la cuve de réaction 59.

Le circuit d'alimentation sodium 61 comprend encore une ligne de retour sodium 73 raccordant fluidiquement la ligne de refoulement 71 au réservoir de stockage de sodium 57.

L'installation 55 comporte encore une unité d'alimentation en gaz inerte 75, configurée pour alimenter le réservoir de stockage de sodium 57 en un gaz inerte.

Le gaz inerte est typiquement de l'azote.

Le réservoir de stockage de sodium 57 est situé à un premier niveau par rapport au sol.

Comme décrit plus loin, l'installation 55 comporte de préférence un seul niveau, les équipements reposant sur un radier 77. Le niveau du sol considéré ici correspond par exemple au niveau du radier 77.

L'organe de circulation 63 est situé à un second niveau par rapport au sol, plus élevé que le premier niveau, c'est-à-dire plus élevé que le niveau du réservoir 57.

On entend par là que l'aspiration 65 de l'organe de circulation 63 est située plus haut que le réservoir de stockage 57, et notamment plus haut que la surface libre du sodium métallique liquide stocké dans le réservoir de stockage 57 quand celui-ci est rempli à son niveau maximum.

L'installation 55 comprend avantageusement un contrôleur 79, pilotant l'unité d'alimentation en gaz inerte 75 pour contrôler une pression de gaz inerte dans le réservoir de stockage de sodium 57, de telle sorte qu'une pression à l'aspiration 65 de l'organe de circulation de sodium 63 soit maintenue dans une fourchette prédéterminée.

Le fait de maintenir la pression à l'aspiration de l'organe de circulation de sodium dans une fourchette prédéterminée contribue à garantir que le débit de sodium délivré par l'organe de circulation 63 à la cuve de réaction 59 est contrôlé de manière précise. Ce point est essentiel pour contrôler la réaction du sodium avec la solution aqueuse et éviter l'emballement de cette réaction.

La fourchette de pression prédéterminée est de préférence [0, 100] mbar efficace et la pression maximale ne doit pas induire de transfert par siphonage vers la cuve de réaction, la pompe étant à l'arrêt.

Pour ce faire, l'unité d'alimentation en gaz inerte 75 comprend une source de gaz inerte 81 raccordée fluidiquement par une ligne de gaz inerte 83 au réservoir de stockage 57.

Elle comporte également une ligne de rejet 84, raccordant fluidiquement le ciel du réservoir de stockage 57 à une unité de traitement de gaz non représentée.

La source de gaz inerte 81 est par exemple un réseau de distribution de gaz inerte. En variante, c'est une bouteille de stockage de gaz inerte sous haute pression.

La source de gaz inerte 81 fournit à la ligne 83 le gaz inerte sous une pression supérieure à la fourchette de pression prédéterminée, par exemple 400 mbar efficace. Cette pression correspond typiquement à la pression à l'aspiration de la pompe doseuse 63, plus la hauteur manométrique entre le niveau de sodium dans le réservoir 57 et l'aspiration 65 de l'organe de circulation 63.

La ligne d'alimentation en gaz inerte 83 est raccordée à un piquage 87 porté par la partie supérieure du réservoir de stockage 57 et débouchant dans le ciel du réservoir. Un piège à vapeur de sodium 89 est implanté sur la ligne 83.

La ligne de rejet 84 est raccordée à un piquage 90 porté par la partie supérieure du réservoir de stockage 57 et débouchant dans le ciel du réservoir. Un piège à vapeur de sodium 88 est implanté sur la ligne 84. L'unité de traitement de gaz permet de rejeter les gaz issus du réservoir 57 dans l'environnement, après purification.

L'unité d'alimentation en gaz inerte 75 comprend une mesure 91 de la pression de gaz dans le ciel du réservoir de stockage 57. Cette mesure est de tout type adapté. La mesure de pression 91 renseigne le contrôleur 79 et lui transmet les valeurs de pression mesurées.

Le réservoir de stockage de sodium 57 est avantageusement équipé d'une mesure de niveau sodium 92. Cette mesure est de tout type adapté. La mesure de niveau sodium 92 renseigne le contrôleur 79 et lui transmet les valeurs de niveau sodium mesurées.

Par ailleurs, la ligne d'alimentation en gaz inerte 83 comporte un organe de contrôle 93, piloté par le contrôleur 79. L'organe de contrôle 93 est intercalé sur la ligne 83, et contrôle le débit de gaz inerte délivré au réservoir de stockage 57 par la ligne 83. De même un organe de contrôle 94, piloté par le contrôleur 79, est intercalé sur la ligne de rejet 84.

Par exemple, les organes de contrôle 93 et 94 sont des vannes commandées.

Les organes de contrôle 93 et 94 sont pilotées par le contrôleur 79 en utilisant la mesure 91 de la pression de gaz dans le ciel du réservoir de stockage 57 et éventuellement la mesure de niveau de sodium 92.

Plus précisément, le contrôleur 79 pilote les organes de contrôles 93 et 94 de manière à maintenir la pression de gaz dans le ciel du réservoir dans une fourchette de pression de gaz déterminée.

Le contrôleur 79 choisit cette fourchette de pression de gaz comme étant égale à la fourchette de pression à l'aspiration de l'organe de circulation plus la hauteur manométrique entre le niveau de sodium dans le réservoir 57 et l'aspiration de l'organe de circulation 63.

Si le niveau de sodium dans le réservoir est sensiblement constant ou change faiblement, le contrôleur 79 considèrera une hauteur manométrique sensiblement constante pour déterminer la fourchette de pression de gaz.

Dans le cas contraire, le contrôleur 79 utilise la mesure de niveau sodium 92 pour déterminer la hauteur manométrique entre le niveau de sodium dans le réservoir 57 et l'aspiration de l'organe de circulation 63.

En effet, la hauteur manométrique entre le niveau de sodium dans le réservoir 57 et l'aspiration de l'organe de circulation 63 varie avec le niveau de sodium dans le réservoir 57.

Le réservoir de stockage de sodium 57 est étanche vis-à-vis du gaz inerte et toutes les lignes débouchant dans le ciel du réservoir 57 sont équipées d'organe de coupure permettant d'interdire les fuites de gaz inerte vers ces lignes quand l'organe de circulation 63 est en fonctionnement.

Avantageusement, la ligne d'aspiration 69 est configurée pour se vider entièrement par gravité dans le réservoir de stockage de sodium 57.

En d'autres termes, la ligne d'alimentation 69 ne comportent pas de siphon, ou de portion en U, dans lequel le sodium métallique liquide pourrait stagner quand l'organe de circulation 63 est à l'arrêt.

Au contraire, quand l'organe de circulation 63 est à l'arrêt, tout le sodium contenu dans la ligne 69 revient par gravité dans la cuve de stockage 57.

De même, la ligne de retour 73 est configurée pour se vider entièrement par gravité dans le réservoir de stockage de sodium 57.

Notamment, la ligne d'aspiration 69 comprend une partie d'extrémité 95 orientée de manière à plonger dans le sodium métallique liquide contenu dans le réservoir de stockage de sodium 57 à travers une surface libre 97 du sodium métallique liquide.

En d'autres termes, la partie d'extrémité 95 de la ligne d'aspiration est un piquage 99 raccordé à la partie supérieure du réservoir 57 et plongeant dans le sodium métallique liquide. Ce piquage 99 est typiquement sensiblement vertical.

La sortie du sodium métallique liquide vers l'organe de circulation 63 se fait donc par le haut du réservoir de stockage 57 et non par le bas, ce qui contribue à réduire les risques de fuite du réservoir.

L'installation 55 comprend encore une ligne 101 de remplissage du réservoir de stockage 57 en sodium.

Cette ligne 101 est raccordée à un stockage de grande capacité contenant le stock de sodium métallique liquide à détruire ou à une installation de vidange de petite capacité.

Typiquement, le réservoir de stockage de sodium 57 a une capacité de stockage supérieure ou égale à une valeur minimum égale à une journée de capacité de traitement de l'installation plus le volume de sodium susceptible d'être contenu dans le circuit d'alimentation 61.

Le réservoir de stockage de sodium 57 a de préférence une capacité de stockage inférieure ou égale à deux journées de capacité de traitement de l'installation.

Avantageusement, le réservoir de stockage de sodium 57 est au moins partiellement situé sous le niveau du sol, ce qui contribue à réduire la hauteur totale de l'installation 55.

Le réservoir de stockage de sodium 57 est un réservoir d'axe horizontal, typiquement un réservoir cylindrique d'axe horizontal.

Il présente par exemple une longueur axiale de l'ordre de 2,5 m et une section perpendiculairement à son axe de l'ordre de 0,5 m$^2$.

Disposer un tel réservoir avec son axe horizontal est plus avantageux que de placer ce même réservoir avec son axe vertical.

En effet, quand un volume donné de sodium est prélevé dans ce réservoir, la différence de niveau est moins grande si le réservoir est agencé avec son axe horizontal que s'il est agencé avec son axe vertical.

En d'autres termes, la section du réservoir, prise perpendiculairement à la direction verticale, est plus grande quand ce réservoir a son axe horizontal que quand il a son axe vertical, tant que le volume de sodium liquide stocké est supérieur à un volume minimum.

Ceci contribue à obtenir une pression sensiblement constante à l'aspiration de l'organe de circulation 63.

La cuve de réaction 59 comprend une buse d'injection de sodium 102, configurée pour éjecter le sodium vers le bas. Cette buse est raccordée à la ligne de refoulement 71.

La solution aqueuse contenue dans la cuve de réaction 59 est typiquement de la soude.

La cuve de réaction 59 comporte une buse 103 d'éjection de solution aqueuse, placée sensiblement sous la buse d'injection de sodium 102. La buse d'éjection de solution aqueuse 103 éjecte la solution aqueuse vers le haut, de telle sorte que le jet de solution aqueuse rencontre le sodium injecté par la buse d'injection de sodium 102.

La buse 103 est alimentée par un circuit de recirculation et de refroidissement 105. Le circuit 105 comprend un conduit 107 dont une extrémité amont est piquée sur une paroi latérale de la cuve de réaction 59. L'extrémité aval du conduit 107 est raccordée à la buse 103. Le circuit 105 comprend encore une pompe de recirculation 109 refoulant la solution aqueuse vers la buse 103.

Le circuit 105 comporte également un échangeur 111, dont un côté est intercalé sur le conduit 107. L'autre côté est raccordé à un groupe froid 113, permettant ainsi de refroidir la solution aqueuse circulant dans le circuit de recirculation et de refroidissement 105.

Une ligne d'amenée d'eau déminéralisée 115 est raccordée au conduit 107. Elle est raccordée à un réseau de distribution d'eau déminéralisée ou à une réserve d'eau déminéralisée. Elle permet de diluer la solution aqueuse contenue dans la cuve de réaction 59, de manière à maintenir la concentration de la soude à une valeur prédéterminée. L'eau déminéralisée amenée par la ligne 115 est injectée dans le conduit 107 et mélangée à la solution aqueuse circulant dans le circuit de recirculation et de refroidissement 105.

L'installation 55 comprend encore une unité de traitement des effluents liquides 117, avec un réservoir de vidange 119 et une ligne de vidange 120 raccordant fluidiquement une sortie de solution aqueuse 121 de la cuve de réaction 59 au réservoir 119.

La sortie de solution aqueuse 121 est typiquement par débordement.

En d'autres termes, la ligne de vidange 120 est raccordée à un trop-plein de la cuve de réaction 59, la solution aqueuse contenue dans la cuve de réaction 59 s'écoulant par le trop-plein dans la ligne 120 quand le niveau de solution aqueuse dans la cuve de réaction dépasse le niveau du trop-plein 121.

Une purge 123 est interposée le long de la ligne de vidange120, immédiatement en aval de la sortie 121.

Avantageusement, la ligne de vidange 120 est configurée pour se vider entièrement par gravité dans le réservoir de vidange 119.

En d'autres termes, il n'existe pas de lyre ou de siphon le long de la ligne de vidange 120, dans lesquels pourrait se constituer un bouchon de solution aqueuse.

L'installation 55 comporte encore un circuit de traitement de l'hydrogène 125, raccordé à la cuve de réaction 59.

Le circuit de traitement de l'hydrogène 125 comporte un filtre à hydrogène 127, placé à l'intérieur de la cuve de réaction 59.

Le circuit de traitement de l'hydrogène 125 comporte encore un laveur de gaz 129. Une entrée de gaz du laveur de gaz 129 est raccordé fluidiquement au filtre à hydrogène 127.

Le circuit de traitement de l'hydrogène 125 comporte en plus un condenseur 131, placé en aval du laveur de gaz 129. Une sortie de gaz du laveur 129 est raccordée à une entrée du gaz du condenseur 131. Le condenseur 131 est équipé d'un serpentin 132, dans lequel circule de l'eau réfrigérée.

Le circuit de traitement de l'hydrogène 125 comporte un filtre THE (Très Haute Efficacité) 133, placé en aval du condenseur 131. Une sortie de gaz du condenseur 131 est raccordée à une entrée de gaz du filtre THE 133.

Le laveur 129 contient un volume de solution aqueuse. Le laveur 129 comporte une sortie de solution aqueuse par débordement, raccordée à la ligne de vidange 120 par une ligne de sortie 135 sur laquelle est interposé un purgeur 137.

Le condenseur 131 présente en point bas une sortie pour la solution aqueuse, raccordée par une ligne de sortie 139 à la ligne de vidange 120. Un purgeur est interposé sur la ligne de sortie 139.

L'installation 55 comporte également une unité de traitement de gaz 141, configurée pour diluer les gaz et relarguer les gaz dilués dans l'atmosphère.

Une sortie du filtre THE est raccordée à l'unité de traitement des gaz 141.

L'unité de traitement des gaz 141 comprend une gaine (non représentée) dans laquelle les gaz issus du circuit de traitement de l'hydrogène 125 sont dilués de telle sorte que la teneur en hydrogène dans le gaz dilué soit inférieure à une teneur prédéterminée excluant tout risque d'explosion.

En pratique, les gaz issus du circuit de traitement de l'hydrogène 125 comportent, pendant le fonctionnement de l'installation, environ 100% d'hydrogène. Dans l'unité de traitement des gaz 141, ces gaz sont dilués à une teneur en hydrogène d'environ 1%.

Du fait de l'absence de lyre dans la ligne de vidange 120, il est possible que de l'hydrogène sorte de la cuve de réaction 59 par la sortie de solution aqueuse 121 et s'écoule jusqu'au réservoir de vidange 119.

Selon l'invention, le réservoir de vidange 119 a une sortie de gaz 143 raccordée fluidiquement à l'unité de traitement de gaz 141 par une ligne 155.

La sortie de gaz 143 est ménagée dans la partie supérieure du réservoir 119 et débouche dans le ciel du réservoir 119.

Par ailleurs, l'unité d'alimentation en gaz inerte 75 est configurée pour alimenter le réservoir de vidange 119 en gaz inerte.

L'installation comprend un organe de contrôle 152 configuré pour maintenir une pression de gaz inerte dans le réservoir de vidange 119 supérieure à un minimum prédéterminé.

L'organe de contrôle 152 est un déverseur implanté sur la ligne 155 pour maintenir le ciel du réservoir 119 sous une pression de gaz inerte.

Le déverseur 152 est un dispositif de robinetterie qui régule la pression du fluide en amont dudit déverseur. En d'autres termes, le déverseur est une restriction commandée par le niveau de pression amont.

Le déverseur 152 est calibré pour maintenir dans le réservoir 119 une pression supérieure audit minimum. Ledit minimum est compris entre 10 et 100 mbar efficace, de préférence compris entre 20 et 60 mbar efficace et vaut par exemple 40 mbar efficace.

Par ailleurs, le contrôleur 79 est configuré pour piloter l'unité d'alimentation en gaz inerte 75 pour assurer un balayage de gaz inerte à l'intérieur du réservoir 119, avec un débit de gaz inerte dans une fourchette prédéterminée.

Le réservoir de vidange 119 comporte à cet effet une entrée de gaz inerte 145, ménagée en partie supérieure du réservoir. Cette entrée 145 est raccordée à la source de gaz inerte 81 par une ligne 147 sur laquelle est intercalé un organe de réglage 149.

L'organe de réglage 149 contrôle le débit de gaz inerte délivrée au réservoir de vidange 119 par la ligne 147. Il est piloté par le contrôleur 79.

L'organe de réglage 149 est par exemple une vanne réglable.

Par ailleurs, le réservoir de vidange 119 est équipé d'une mesure de pression de gaz 151. La mesure 151 fournit les valeurs de pression mesurées au contrôleur 79.

Par ailleurs, l'unité de traitement des effluents liquides 117 est de préférence équipée d'un débitmètre 153 configuré pour mesurer le débit de gaz circulant dans le ciel du réservoir 119.

Le contrôleur 79 pilote l'organe de contrôle 149 en fonction des valeurs de débit mesurées par le débitmètre 153, de manière à maintenir le débit de gaz dans une fourchette prédéterminée.

La fourchette de débit de gaz prédéterminée est par exemple [0,1 ; 10] Nm3/h, de préférence [0,2 ; 5] Nm3/h, encore de préférence [0,5 ; 1] Nm3/h.

Le contrôleur 79 est de préférence programmé pour adapter le débit de gaz au débit de transfert de soude vers le réservoir de stockage de soude 157, qui sera décrit plus loin. Le débit de gaz est ainsi augmenté pour maintenir la pression dans le ciel du réservoir en compensant l'augmentation du volume de gaz liée au transfert de soude.

Selon la variante illustrée sur la figure 2, le débitmètre est implanté sur la ligne 147. Dans ce cas, le contrôleur 79 est programmé pour piloter l'organe de contrôle 149 non seulement en utilisant la mesure fournie par le débitmètre 153 mais également en utilisant la mesure de pression 151.

Par exemple, le degré d'ouverture O de l'organe de contrôle 149 est déterminé en utilisant l'équation suivante :

$$O = K1 * (P_{mes} - P_{ref}) + K2 * (Q_{mes} - Q_{ref}) + K3$$

Où K1, K2 et K3 sont des constants prédéterminées, $P_{ref}$ est une valeur de référence pour la pression de gaz dans le réservoir 119, $Q_{ref}$ est une valeur de référence pour le débit de gaz entrant dans le ciel du réservoir 119, $P_{mes}$ est la

valeur fournie par la mesure de pression de gaz 151, $Q_{mes}$ est la valeur fournie par le débitmètre 153.

En variante, le débitmètre 153 est implanté de manière à mesurer le débit de gaz dans la ligne 155 raccordant la sortie de gaz 143 du réservoir à l'unité de traitement des gaz 141.

Dans cette configuration, le contrôleur 79 pilote l'organe de contrôle 149 en utilisant la mesure fournie par la valeur fournie par le débitmètre 153, sans utiliser la mesure de pression 151.

Ainsi, le ciel de la cuve de vidange est rempli de gaz inerte.

L'hydrogène provenant de la cuve de réaction 59 et s'écoulant en situation incidentelle dans le réservoir de vidange 119 par la ligne de vidange 120 ne peut pas provoquer d'explosion.

Il est continuellement évacué vers l'unité de traitement des gaz 141. Cette évacuation est obtenue du fait que le réservoir de vidange 119 est raccordé à l'unité d'alimentation en gaz inerte 75. Celle-ci maintient continuellement une surpression de gaz inerte dans le réservoir de vidange 119 et assure continuellement un balayage de gaz inerte dans le ciel de ce réservoir.

Le fait de maintenir le réservoir de vidange 119 en surpression contribue à réduire le risque de pénétration d'air à l'intérieur du réservoir.

Le réservoir de vidange 119 a une capacité de stockage comprise entre :

- un volume minimum égal à un volume nominal de solution aqueuse contenue dans la cuve de réaction 59, plus un volume nominal de solution aqueuse contenue dans le laveur de gaz 129 ; et
- un volume maximum égal à la production de soude sur une durée de 6 heures.

En d'autres termes, le réservoir de vidange 119 est dimensionné pour recevoir le volume de solution aqueuse contenue dans la cuve de réaction 59, et le volume de solution aqueuse contenue dans le circuit de recirculation et de refroidissement 105, dans la ligne de vidange 120 et dans le circuit de traitement de l'hydrogène 125. Il n'est pas dimensionné, en revanche, pour stocker le volume de solution aqueuse résultant du fonctionnement de l'installation 55 pendant une période de temps significative, par exemple une journée.

A cet effet, l'installation 55 comprend un réservoir de stockage de solution aqueuse 157, ayant une capacité de stockage supérieure à une journée de production de l'installation à capacité de traitement nominal.

Par exemple, le réservoir de stockage de solution aqueuse 157 a une capacité de stockage d'une semaine de production à capacité de traitement nominal.

Si nécessaire, l'installation comprend plusieurs réservoirs de stockage de solution aqueuse.

Par exemple, le réservoir de vidange 119 présente une capacité de stockage de l'ordre de 1 m³ de solution aqueuse. L'installation 55 comporte par ailleurs trois réservoirs de stockage de solution aqueuse 157, d'un volume de 30 m³ chacun.

Le réservoir de stockage 157 présente une entrée d'air 158, par laquelle le ciel du réservoir de stockage 157 communique avec l'atmosphère du local où est implanté le réservoir 157. Le réservoir de stockage 157 présente également une sortie de gaz 159 débouchant dans le ciel du réservoir 157. Cette sortie de gaz 159 est raccordée au système de ventilation 160 du bâtiment. Ce système de ventilation est de type classique. Il est différent de l'unité de traitement des gaz 141 vers laquelle sont dirigés les gaz issus du procédé, contenant de l'hydrogène.

Le réservoir de vidange 119 est au moins partiellement situé sous le niveau du sol. Le ou chaque réservoir de stockage de solution aqueuse 157 est en revanche situé au-dessus du niveau du sol.

L'installation 55 comprend par ailleurs un organe de transfert 161 ayant une aspiration raccordée fluidiquement au réservoir de vidange 119 et un refoulement raccordé fluidiquement au réservoir de stockage de solution aqueuse 157.

Le fait d'utiliser un réservoir de vidange de petite capacité, au moins partiellement enterré, et un réservoir de stockage de solution aqueuse de grande capacité, situé au-dessus du sol, contribue à réduire la hauteur totale de l'installation.

Il devient alors possible d'agencer l'installation 55 sur un seul niveau.

Dans l'installation illustrée sur la figure 1, les équipements sont agencés sur deux niveaux. Le réservoir de stockage de sodium 3 et le réservoir de vidange et de stockage de la solution aqueuse 47 sont disposés au niveau du sol, la cuve de réaction 19 étant située à un niveau supérieur.

En conséquence, le coût du Génie Civil pour l'installation de destruction de sodium 55 de la figure 2 est réduit.

L'unité d'alimentation en gaz inerte 75 comporte une ligne 162 raccordée au ciel de la cuve de réaction 59. Cette ligne est prévue pour inerter la cuve de réaction et le circuit de traitement de l'hydrogène, avant démarrage de l'installation.

L'installation 55 comporte encore un circuit 163 alimentant le serpentin 132 en eau réfrigérée. Le circuit 163 est raccordé à un groupe froid 165.

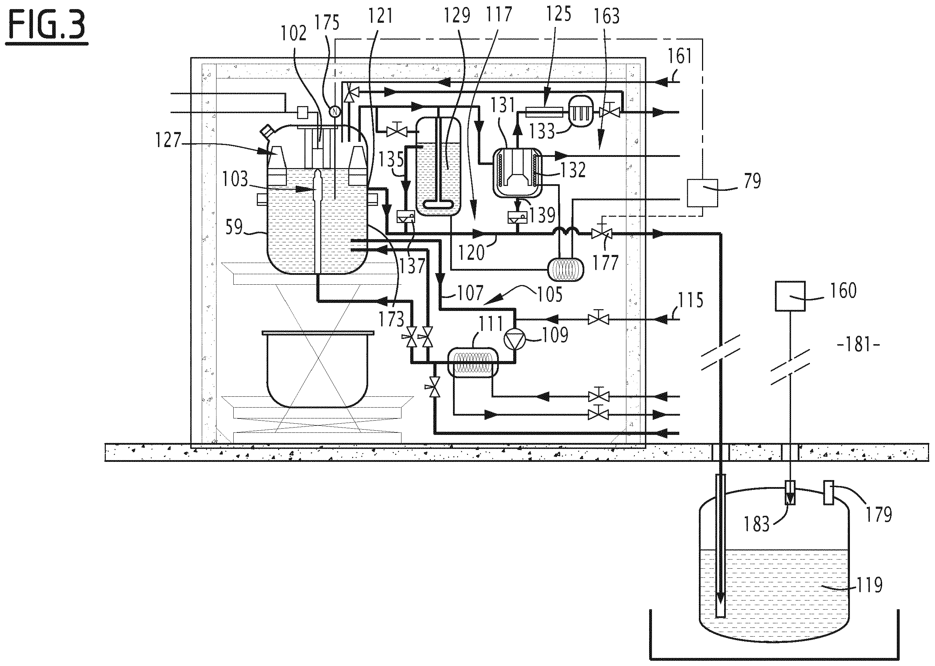

Une variante de l'installation 55 va maintenant être décrite, en référence à la figure 3. Seuls les points par lesquels l'installation de la figure 3 se différencie de l'installation de la figure 2 seront détaillés ci-dessous.

Les éléments identiques ou assurant la même fonction seront désignés par les mêmes références.

Dans la variante de la figure 3, non conforme à l'invention, la sortie de solution aqueuse 121 de la cuve de réaction 59 n'est pas une sortie par débordement. La sortie de solution aqueuse 121 est noyée, et débouche sous un niveau nominal de solution aqueuse dans la cuve de réaction 59.

Typiquement, la sortie de solution aqueuse 121 est un piquage, ménagé dans une paroi latérale 173 de la cuve de réaction 59, sous le niveau nominal de solution aqueuse.

Dans ce cas, la cuve de réaction 59 comprend avantageusement une mesure de niveau de solution aqueuse 175. Cette mesure de niveau est de tout type adapté. Elle mesure le niveau de solution aqueuse dans la cuve de réaction 59. Elle transmet les valeurs mesurées au contrôleur 79.

La ligne de vidange 120 comprend par ailleurs un organe d'obturation réglant 177.

L'organe d'obturation 177 est intercalé sur la ligne de vidange 120, et permet de moduler la section de passage offerte à la solution aqueuse circulant dans la ligne de vidange 120.

L'organe d'obturation 177 est par exemple une vanne réglante.

Le contrôleur 79 pilote l'organe d'obturation 177 en utilisant les valeurs de niveau mesurées par la mesure de niveau 175. Le contrôleur 79 pilote l'organe d'obturation 177 pour maintenir le niveau de solution aqueuse dans la cuve de réaction 59 dans une fourchette prédéterminée.

Quand le niveau de solution aqueuse est dans la fourchette prédéterminée, la sortie de solution aqueuse 121 est noyée.

En conséquence, il n'est pas nécessaire de raccorder le réservoir de vidange 119 à l'unité d'alimentation en gaz inerte 75. Il n'est pas nécessaire non plus de raccorder le réservoir de vidange 119 à l'unité de traitement des gaz 141.

En effet, du fait que la sortie 121 est constamment noyée, il n'y a pas d'hydrogène qui circule depuis la cuve de réaction 59 jusqu'au réservoir de vidange 119 par la ligne de vidange 120.

Le réservoir de vidange 119 au contraire comporte une entrée de gaz 179 mettant en communication fluidique le ciel du réservoir de stockage 119 avec l'atmosphère 181 du local dans lequel est implanté le réservoir 119.

Le réservoir de vidange 119 comporte par ailleurs une sortie de gaz 183 mettant en communication le ciel du réservoir 119 avec la ventilation bâtiment 160.

Selon un second aspect, l'invention porte sur un procédé de destruction de sodium radioactif, provenant typiquement d'un réacteur à neutrons rapides.

Ce procédé est spécialement adapté à l'installation 55 décrite plus haut.

Inversement, l'installation 55 est spécialement conçue pour la mise en oeuvre du procédé qui va être décrit.

Le procédé comporte les étapes suivantes :

- Alimenter en sodium métallique liquide une cuve de réaction 59 contenant une solution aqueuse, la cuve de réaction ayant une sortie de solution aqueuse 121 ;
- Collecter la solution aqueuse provenant de la cuve de réaction 59 dans un réservoir de vidange 119, la solution aqueuse s'écoulant par une ligne de vidange 120 depuis la sortie de solution aqueuse 121 jusqu'au réservoir de vidange 119 ;
- Alimenter en un gaz inerte le réservoir de vidange 119 ;
- Diluer les gaz issus du réservoir de vidange 119 et relarguer les gaz dilués dans l'atmosphère.

La cuve de réaction 59 est comme décrit plus haut en référence à la figure 2.

La sortie de solution aqueuse 121 est par débordement, ou en d'autres termes par trop-plein. Cette sortie a été décrite plus haut en référence à la figure 2.

Le réservoir de vidange 119 est comme décrit plus haut, en référence à la figure 2. La ligne de vidange 120 est comme décrit plus haut en référence à la figure 2.

Le réservoir de vidange 119 est alimenté en gaz inerte comme décrit plus haut.

Les gaz issus du réservoir de vidange 119 sont dirigés vers une unité de traitement des gaz 141, du type décrit plus haut.

Les gaz issus du réservoir de vidange 119 sont susceptibles de contenir de l'hydrogène, du fait que le réservoir de vidange 119 est raccordé à une sortie de liquide par débordement de la cuve de réaction 59. Dans l'unité de traitement des gaz 141, les gaz issus du réservoir de vidange 119 sont dilués avec un taux de dilution garantissant que la teneur en hydrogène après dilution exclue de tout risque d'explosion.

**Revendications**

1. Installation de destruction de sodium métallique radioactif, l'installation (55) comprenant :

   - une cuve de réaction (59) contenant une solution aqueuse, la cuve de réaction (59) ayant une sortie de solution aqueuse (121) ;

- un circuit d'alimentation sodium (61) configuré pour alimenter la cuve de réaction (59) en sodium métallique liquide ;
- une unité de traitement des effluents liquides (117), comprenant un réservoir de vidange (119) et une ligne de vidange (120) raccordant fluidiquement la sortie de solution aqueuse (121) au réservoir de vidange (119) ;
- une unité de traitement des gaz (141) et une unité d'alimentation en gaz inerte (75) ; **caractérisée en ce que** :

- l'unité de traitement des gaz (141) est configurée pour diluer les gaz et relarguer les gaz dilués dans l'atmosphère, le réservoir de vidange (119) ayant une sortie de gaz (143) raccordée fluidiquement à l'unité de traitement des gaz (141) ;
- l'unité d'alimentation en gaz inerte (75) est configurée pour alimenter le réservoir de vidange (119) en un gaz inerte.

2. Installation selon la revendication 1, dans laquelle la sortie de solution aqueuse (121) est par débordement.

3. Installation selon la revendication 1 ou 2, dans laquelle l'installation comprend un organe de contrôle (152) configuré pour maintenir une pression de gaz inerte dans le réservoir de vidange (119) supérieure à un minimum prédéterminé.

4. Installation selon l'une quelconque des revendications précédentes, dans laquelle un contrôleur (79) pilote l'unité d'alimentation en gaz inerte (75) pour assurer un balayage de gaz inerte dans le réservoir de vidange (119), avec un débit de gaz inerte dans une fourchette prédéterminée.

5. Installation selon l'une quelconque des revendications 1 à 4, dans laquelle la ligne de vidange (120) est configurée pour se vider entièrement par gravité dans le réservoir de vidange (119).

6. Installation selon l'une quelconque des revendications 1 à 5, dans laquelle l'installation comprend un circuit de traitement de l'hydrogène (125) raccordé à la cuve de réaction (59), équipé d'au moins un laveur de gaz (129), le réservoir de vidange (119) ayant une capacité de stockage comprise entre :

- un volume minimum égal à un volume nominal de solution aqueuse contenu dans la cuve de réaction (59) plus un volume nominal de solution aqueuse contenu dans le laveur de gaz (129) ; et
- un volume maximum égal à la production de soude sur une durée de 6 heures.

7. Installation selon l'une quelconque des revendications 1 à 6, dans laquelle l'installation comprend un réservoir de stockage de solution aqueuse (157) ayant une capacité de stockage supérieure à une journée de production de l'installation à capacité de traitement nominale.

8. Installation selon la revendication 7, dans laquelle l'installation comprend un organe de transfert (161) ayant une aspiration raccordée au réservoir de vidange (119) et un refoulement raccordé au réservoir de stockage de solution aqueuse (157).

9. Installation selon la revendication 8, dans laquelle le réservoir de vidange (119) est au moins partiellement situé sous le niveau du sol et le réservoir de stockage de solution aqueuse (157) est situé au-dessus du niveau du sol.

10. Procédé de destruction du sodium d'un réacteur nucléaire à neutrons rapides, le procédé comprenant les étapes suivantes :

- alimenter en sodium métallique liquide une cuve de réaction (59) contenant une solution aqueuse, la cuve de réaction (59) ayant une sortie de solution aqueuse (121) ;
- collecter la solution aqueuse provenant de la cuve de réaction (59) dans un réservoir de vidange (119), la solution aqueuse s'écoulant par une ligne de vidange (120) depuis la sortie de solution aqueuse (121) jusqu'au réservoir de vidange (119) ;
- alimenter en un gaz inerte le réservoir de vidange (119) ;
- diluer les gaz issus du réservoir de vidange (119), et relarguer les gaz dilués dans l'atmosphère.

**Patentansprüche**

1. Anlage zur Vernichtung von radioaktivem metallischem Natrium, wobei die Anlage (55) Folgendes umfasst:

- einen Reaktionsbehälter (59), enthaltend eine wässrige Lösung, wobei der Reaktionsbehälter (59) einen Ausgang von wässriger Lösung (121) aufweist;
- einen Natriumversorgungskreislauf (61), der konfiguriert ist, um den Reaktionsbehälter (59) mit flüssigem metallischem Natrium zu versorgen;
- eine Einheit zur Verarbeitung der flüssigen Abläufe (117), umfassend einen Entleerungstank (119) und eine Entleerungsleitung (120), die den Ausgang der wässrigen Lösung (121) fluidisch mit dem Entleerungstank (119) verbindet;
- eine Einheit zur Verarbeitung der Gase (141) und eine Einheit zur Versorgung mit inertem Gas (75); **dadurch gekennzeichnet, dass**:

- die Einheit zur Verarbeitung der Gase (141) konfiguriert ist, um die Gase zu verdünnen und die verdünnten Gase in die Atmosphäre freizusetzen, wobei der Entleerungstank (119) einen Gasausgang (143) aufweist, der fluidisch mit der Einheit zur Behandlung der Gase (141) verbunden ist;
- die Einheit zur Versorgung mit inertem Gas (75) konfiguriert ist, um den Entleerungstank (119) mit inertem Gas zu versorgen.

2. Anlage nach Anspruch 1, wobei der Ausgang der wässrigen Lösung (121) durch Überlaufen erfolgt.

3. Anlage nach Anspruch 1 oder 2, wobei die Anlage ein Steuerorgan (152) umfasst, das konfiguriert ist, um einen Druck des inerten Gases in dem Entleerungstank (119) von mehr als einem vorherbestimmten Minimum beizubehalten.

4. Anlage nach einem der vorhergehenden Ansprüche, wobei eine Steuervorrichtung (79) die Einheit zur Versorgung mit inertem Gas (75) steuert, um eine Abtastung des inerten Gases in dem Entleerungstank (119) mit einem Durchsatz von inertem Gas in einer vorherbestimmten Bandbreite sicherzustellen.

5. Anlage nach einem der Ansprüche 1 bis 4, wobei die Entleerungsleitung (120) konfiguriert ist, um sich vollständig durch Schwerkraft in den Entleerungstank (119) zu entleeren.

6. Anlage nach einem der Ansprüche 1 bis 5, wobei die Anlage einen Kreislauf zur Behandlung des Wasserstoffs (125) umfasst, der mit dem Reaktionsbehälter (59) verbunden ist, ausgestattet mit mindestens einem Gaswäscher (129), wobei der Entleerungstank (119) eine Speicherkapazität aufweist, die im Bereich liegt, zwischen:

- einem minimalen Volumen, das gleich einem nominalen Volumen von wässriger Lösung ist, die in dem Reaktionsbehälter (59) enthalten ist, zusätzlich zu einem nominalen Volumen von wässriger Lösung, die in dem Gaswäscher (129) enthalten ist; und
- ein maximales Volumen gleich der Produktion von Natron während einer Dauer von 6 Stunden.

7. Anlage nach einem der Ansprüche 1 bis 6, wobei die Anlage einen Tank zur Speicherung von wässriger Lösung (157) umfasst, der eine Speicherkapazität aufweist, die grösser als eine Tagesproduktion der Anlage mit nominaler Verarbeitungskapazität ist.

8. Anlage nach Anspruch 7, wobei die Anlage ein Übertragungsorgan (161) umfasst, das eine Ansaugung aufweist, die mit dem Entleerungstank (119) verbunden ist, und eine Verdrängung, die mit dem Tank zur Speicherung von wässriger Lösung (157) verbunden ist.

9. Anlage nach Anspruch 8, wobei der Entleerungstank (119) sich mindestens teilweise unter dem Niveau des Bodens befindet und der Tank zur Speicherung der wässrigen Lösung (157) sich über dem Niveau des Bodens befindet.

10. Verfahren zur Vernichtung des Natriums eines nuklearen schnellen Neutronenreaktors, wobei das Verfahren die folgenden Schritte umfasst:

- Versorgen eines Reaktionsbehälters (59) mit flüssigem metallischem Natrium, enthaltend eine wässrige Lösung, wobei der Reaktionsbehälter (59) einen Ausgang von wässriger Lösung (121) aufweist;
- Sammeln der wässrigen Lösung, die aus dem Reaktionsbehälter (59) stammt, in einem Entleerungstank (119), wobei die wässrige Lösung durch eine Entleerungsleitung (120) von dem Ausgang von wässriger Lösung (121) bis zu dem Entleerungstank (119) abläuft;
- Versorgen des Entleerungstanks (119) mit inertem Gas;
- Verdünnen der Gase, die aus dem Entleerungstank (119) stammen, und Freisetzen der verdünnten Gase in die Atmosphäre.

**Claims**

1. A radioactive metal sodium destruction installation, the installation (55) comprising:

   - a reaction vessel (59) containing an aqueous solution, the reaction vessel (59) having an aqueous solution outlet (121);
   - a sodium feed circuit (61) configured for feeding liquid metallic sodium into the reaction vessel (59);
   - a liquid effluent treatment unit (117), comprising a drain tank (119) and a drain line (120) fluidically connecting the aqueous solution outlet (121) to the drain tank (119);
   - a gas treatment unit (141) and an inert gas feed unit (75);

   **characterized in that**:

   - the gas treatment unit (141) is configured for diluting the gases and releasing the diluted gases into the atmosphere, the drain tank (119) having a gas outlet (143) fluidically connected to the gas treatment unit (141);
   - the inert gas feed unit (75) is configured for feeding an inert gas into the drain tank (119).

2. The installation according to claim 1, wherein the aqueous solution outlet (121) is an overflow outlet.

3. The installation according to claim 1 or 2, wherein the installation comprises a control member (152) configured for maintaining an inert gas pressure in the drain tank (119) above a predetermined minimum.

4. The installation according to any preceding claim, wherein a controller (79) controls the inert gas feed unit (75) so as to provide an inert gas sweeping in the drain tank (119) with an inert gas flow-rate within a predetermined range.

5. The installation according to any of claims 1 to 4, wherein the drain line (120) is configured for emptying completely into the drain tank (119), by gravity.

6. The installation according to any of claims 1 to 5, wherein the installation comprises a hydrogen treatment circuit (125) connected to the reaction vessel (59), equipped with at least one gas scrubber (129), the drain tank (119) having a storage capacity comprised between:

   - a minimum volume equal to a nominal volume of aqueous solution contained in the reaction vessel (59) plus a nominal volume of aqueous solution contained in the gas scrubber (129); and
   - a maximum volume equal to the production of sodium hydroxide over a period of 6 hours.

7. The installation according to any of claims 1 to 6, wherein the installation comprises an aqueous solution storage tank (157) having a storage capacity greater than one production day of the installation at nominal treatment capacity.

8. The installation according to claim 7, wherein the installation comprises a transfer member (161) having an intake connected to the drain tank (119) and a discharge connected to the aqueous solution storage tank (157).

9. The installation according to claim 8, wherein the drain tank (119) is at least partially located below ground level and the aqueous solution storage tank (157) is located above ground level.

10. A process for the destruction of sodium in a fast-neutron nuclear reactor, the process comprising the following steps:

    - feeding liquid metallic sodium into a reaction vessel (59) containing an aqueous solution, the reaction vessel (59) having an aqueous solution outlet (121);
    - collecting the aqueous solution from the reaction vessel (59) in a drain tank (119), the aqueous solution flowing through a drain line (120) from the aqueous solution outlet (121) right to the drain tank (119);
    - feeding an inert gas into the drain tank (119);
    - diluting the gases coming from the drain tank (119), and releasing the diluted gases into the atmosphere.

FIG.1

EP 4 123 666 B1

**FIG.2**

FIG.3

EP 4 123 666 B1

15

**EP 4 123 666 B1**

**RÉFÉRENCES CITÉES DANS LA DESCRIPTION**

**Documents brevets cités dans la description**

- EP 0245148 A1